# EUROPÄISCHE PATENTSCHRIFT

(11) **EP 2 877 816 B1**
(45) Veröffentlichungstag und Bekanntmachung des Hinweises auf die Patenterteilung: **11.09.2019**
(21) Anmeldenummer: 13739647.9
(22) Anmeldetag: 15.07.2013
(51) Int. Cl.: G01F 1/708, G01F 1/712, G01F 23/296, G01F 1/66

(54) **VERFAHREN UND VORRICHTUNG ZUM BETREIBEN EINER AKUSTISCHEN MESSVORRICHTUNG**
METHOD AND APPARATUS FOR OPERATING AN ACOUSTIC MEASURING APPARATUS
PROCÉDÉ ET DISPOSITIF D'EXPLOITATION D'UN DISPOSITIF DE MESURE ACOUSTIQUE

(30) Priorität: 24.07.2012 DE 102012212901
(43) Veröffentlichungstag der Anmeldung: 03.06.2015
(73) Patentinhaber: CPT Group GmbH, 30165 Hannover (DE)
(72) Erfinder: REITMEIER, Torsten, 92442 Wackersdorf (DE); SCHIESSL, Sabrina, 93458 Eschlkam (DE)
(74) Vertreter: Waldmann, Georg Alexander
(86) Internationale Anmeldenummer: PCT/EP2013/064925
(87) Internationale Veröffentlichungsnummer: WO 2014/016159

(56) Entgegenhaltungen:
- US-A1- 2005 072 226
- US-A1- 2011 288 795
- US-B2- 6 587 796

## Beschreibung

Die Erfindung betrifft ein Verfahren und eine entsprechende Vorrichtung zum Betreiben einer akustischen Messvorrichtung.

Eine akustische Messvorrichtung kann insbesondere zur Durchflussmessung von Fluiden in Fluidleitungen sowie zur Bestimmung der Zusammensetzung des Fluids verwendet werden. Ein Schallmesswandler der akustischen Messvorrichtung kann sowohl als Schallerzeuger als auch als Schallempfänger arbeiten. Aus der Laufzeit der Schallimpulse können Rückschlüsse auf die Geschwindigkeit des Fluids in der Fluidleitung gezogen werden. Des Weiteren kann die akustische Messvorrichtung insbesondere zum Bestimmen einer Höhe eines Fluidniveaus in einem Fluidbehälter verwendet werden.

US 2005/0072226 A1 offenbart ein Fluidpegelmesssystem, bei dem ein Ultraschallsignal ausgesendet wird und anschließend ein Ultraschallsignal empfangen wird und eine Kreuzkorrelation des empfangenen Ultraschallsignals mit dem ausgesendeten Ultraschallsignal durchgeführt wird.

US 2011/0288795 A1 offenbart ein Verfahren zur Schätzung einer Laufzeit eines akustischen Signals bei dem ein Schallsignal mittels eines Ansteuersignals von einem Schallgeber erzeugt wird und bei dem ein empfangenes elektromagnetisches Signal mit dem Ansteuersignal korreliert wird.

US 6,587,796 B2 offenbart ein Verfahren zur Ultraschalldurchflussmessung bei dem ein Empfangssignal in Flussrichtung und ein Empfangssignal gegen Flussrichtung empfangen wird und eine Kreuzkorrelation dieser beiden Signale durchgeführt wird.

Die Aufgabe der Erfindung ist, ein Verfahren und eine korrespondierende Vorrichtung zum Betreiben einer akustischen Messvorrichtung zu schaffen, das beziehungsweise die eine hohe Messgenauigkeit der akustischen Messvorrichtung ermöglicht.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich durch ein Verfahren und eine korrespondierende Vorrichtung zum Betreiben einer akustischen Messvorrichtung aus, bei dem mindestens ein Schallmesswandler der akustischen Messvorrichtung bereitgestellt wird, wobei der mindestens eine Schallmesswandler ausgebildet ist zum Aussenden und/oder zum Empfangen von Schallsignalen. Ein Ausgangssignal wird von dem mindestens einen Schallmesswandler abgegeben, und ein Echosignal des Ausgangssignals wird von dem mindestens einen Schallmesswandler empfangen. Ein zeitlicher Verlauf des Echosignals wird erfasst. Aus dem zeitlichen Verlauf des Echosignals wird ein erster Schätzwert einer Laufzeit des Schallsignals vom Beginn des Ausgangssignals bis zum Beginn des Echosignals bestimmt. Mittels einer Kreuzkorrelation zwischen dem Echosignal und einem Referenzsinussignal wird ein Verlauf einer Kreuzkorrelationsfunktion abhängig von einer Frequenz und einer Phase des Referenzsinussignals ermittelt, wobei die Frequenz des Referenzsinussignals derart variiert wird, dass sie in einem vorgegebenen Bereich um eine Frequenz des Ausgangssignals liegt. Ein Wert der Frequenz des Referenzsinussignals und ein Wert der Phase des Referenzsinussignals werden ermittelt, für die ein Maximalwert der Kreuzkorrelationsfunktion erreicht wird. Abhängig von dem Wert der Frequenz des Referenzsinussignals und dem Wert der Phase des Referenzsinussignals, für die der Maximalwert der Kreuzkorrelationsfunktion erreicht wird, und dem ersten Schätzwert der Laufzeit des Schallsignals vom Beginn des Ausgangssignals bis zum Beginn des Echosignals wird ein aktualisierter Schätzwert der Laufzeit des Schallsignals vom Beginn des Ausgangssignals bis zum Beginn des Echosignals bestimmt.

Der Wert der Frequenz des Referenzsinussignals, für den der Maximalwert der Kreuzkorrelationsfunktion erreicht wird, ist repräsentativ für eine maximale Übereinstimmung der Frequenz des Referenzsinussignals mit der Frequenz des Echosignals. Der Wert der Phase des Referenzsinussignals, für den der Maximalwert der Kreuzkorrelationsfunktion erreicht wird, ist repräsentativ für eine maximale Übereinstimmung der Phase des Referenzsinussignals mit der Phase des Echosignals.

Dies hat den Vorteil, dass der aktualisierte Schätzwert der Laufzeit des Schallsignals von einem Beginn des Ausgangssignals bis zu einem Beginn des Echosignals mittels der Kreuzkorrelation sehr genau bestimmt werden kann. Damit ist es des Weiteren möglich, das Echosignal mit einer niedrigen Abtastrate abzutasten, und dabei dennoch eine genaue Bestimmung der Laufzeit des Schallsignals vom Beginn des Ausgangssignals bis zum Beginn des Echosignals zu erreichen. Aufgrund der Möglichkeit des Abtastens des Echosignals mit einer niedrigen Abtastrate kann insbesondere auch die Notwendigkeit des Einsatzes eines schnellen Analog-Digital-Wandlers zur Bestimmung der Laufzeit des Schallsignals von einem Beginn des Ausgangssignals bis zu einem Beginn des Echosignals vermieden werden.

In einer vorteilhaften Ausgestaltung wird die Kreuzkorrelationsfunktion der Kreuzkorrelation zwischen dem Echosignal und dem Referenzsinussignal abhängig von der Frequenz und für Phasenwerte 0 und π/2 des Referenzsinussignals ermittelt. Dies hat den Vorteil, dass aufgrund der Periodizität der Kreuzkorrelationsfunktion bei der Berechnung der Laufzeit des Schallsignals auf eine umfassende Phasenvariation verzichtet werden kann, und die Berechnung auf die Benutzung von zwei Phasenwerten beschränkt werden kann. Damit kann die Berechnung der Laufzeit des Schallsignals mit sehr geringem Rechenaufwand erfolgen.

In einer weiteren vorteilhaften Ausgestaltung erfolgt das Bestimmen des aktualisierten Schätzwerts der Laufzeit des Schallsignals vom Beginn des Ausgangssignals bis zum Beginn des Echosignals mittels eines Iterationsverfahrens. Dies hat den Vorteil, dass die Berechnung der Laufzeit des Schallsignals vom Beginn des Ausgangssignals bis zum Beginn des Echosignals sehr effektiv erfolgen kann.

In einer weiteren vorteilhaften Ausgestaltung wird das Echosignal auf einen Wert eines maximalen Betrags einer Amplitude des Echosignals normiert. Dies hat den Vorteil, dass eine Bestimmung des ersten Schätzwerts der Laufzeit des Schallsignals vom Beginn des Ausgangssignals bis zum Beginn des Echosignals in einfacher Weise erfolgen kann.

In einer weiteren vorteilhaften Ausgestaltung wird der erste Schätzwert der Laufzeit des Schallsignals vom Beginn des Ausgangssignals bis zum Beginn des Echosignals bestimmt abhängig von einem Zeitpunkt eines ersten Nulldurchgangs des normierten Echosignals. Dies hat den Vorteil, dass der erste Nulldurchgang des normierten Echosignals gut zur Bestimmung des Beginns des Echosignals herangezogen werden kann.

In einer weiteren vorteilhaften Ausgestaltung wird der aktualisierte Schätzwert der Laufzeit des Schallsignals vom Beginn des Ausgangssignals bis zum Beginn des Echosignals bestimmt, abhängig von einem Zeitpunkt eines Nulldurchgangs des Referenzsinussignals. Dies hat den Vorteil, dass Nulldurchgänge des Referenzsinussignals gut zur Bestimmung des Beginns des Echosignals herangezogen werden können.

In einer weiteren vorteilhaften Ausgestaltung ist der mindestens eine Schallmesswandler ein Ultraschallmesswandler. Dies hat den Vorteil, dass Ultraschall für viele Anwendungen mit Fluiden, beispielsweise das Ermitteln einer Strömungsgeschwindigkeit des Fluids in einer Fluidleitung, sehr gut und vielfältig einsetzbar ist.

Ausführungsbeispiele der Erfindung sind im Folgenden anhand der schematischen Zeichnungen erläutert.

Es zeigen:
- Figur 1: eine schematische Ansicht einer akustischen Messvorrichtung,
- Figur 2: ein zeitlicher Verlauf eines Ausgangssignals und von Echosignalen,
- Figur 3: ein weiterer zeitlicher Verlauf eines normierten Echosignals,
- Figur 4: ein weiterer zeitlicher Verlauf eines normierten Echosignals und eines Referenzsinussignals und
- Figur 5: ein Ablaufdiagramm eines Programms zum Betreiben einer akustischen Messvorrichtung.

Elemente gleicher Konstruktion oder Funktion sind figuren-übergreifend mit den gleichen Bezugszeichen versehen.

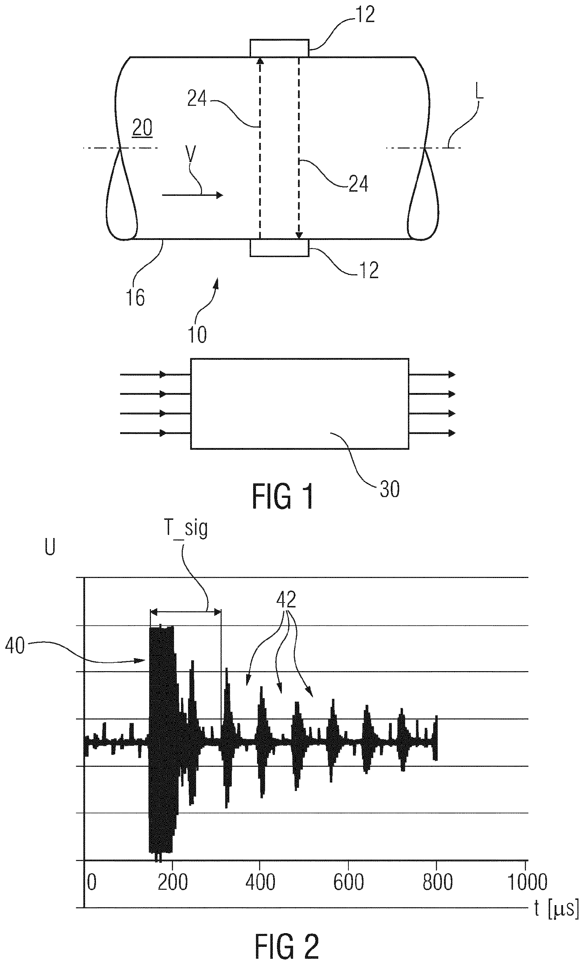

Figur 1 zeigt eine akustische Messvorrichtung 10, die mindestens einen Schallmesswandler 12 hat. Der mindestens eine Schallmesswandler 12 ist vorzugsweise als Ultraschallmesswandler ausgebildet.

In einem Messrohr 16 mit einer Längsachse L strömt ein Fluid 20. Das Fluid 20 hat eine Strömungsgeschwindigkeit v. Das Fluid 20 kann eine Flüssigkeit oder ein gasförmiges Medium sein. Insbesondere kann das Fluid 20 die Frischluft oder das Abgas einer Brennkraftmaschine sein. Der mindestens eine Schallmesswandler 12 kann entweder in Richtung oder in jedem beliebigen Winkel zu der Längsachse L Schallsignale aussenden und empfangen. Aus einer Laufzeit der Schallsignale kann die Strömungsgeschwindigkeit v des Fluids 20 berechnet werden. Ein möglicher Weg der Schallsignale von dem mindestens einen Schallmesswandler 12 zu dem Messrohr 16 und wieder zurück oder zu einem zweiten Schallwandler erfolgt beispielsweise auf einem Pfad 24 durch das Fluid 20. In einer alternativen Ausführungsform weist die akustische Messvorrichtung 10 zwei Schallmesswandler 12 auf, von denen der eine dazu ausgebildet ist, Schallsignale auszusenden und der andere dazu ausgebildet ist, Schallsignale zu empfangen.

In Figur 1 ist weiter eine Vorrichtung 30 zum Betreiben der akustischen Messvorrichtung 10 dargestellt. Der Vorrichtung 30 sind Sensoren zugeordnet, die verschiedene Messgrößen erfassen und jeweils den Wert der Messgrößen ermitteln können. Die Vorrichtung 30 ist dazu ausgebildet, in Abhängigkeit von mindestens einer der Messgrößen Werte zu ermitteln, mittels der ein Betrieb der akustischen Messvorrichtung 10 ermöglicht wird.

Im Folgenden soll die Funktionsweise der akustischen Messvorrichtung 10 kurz dargestellt werden:
Schallsignale werden von dem mindestens einen Schallmesswandler 12 ausgesendet und gelangen in das Fluid 20. Je nach der Strömungsgeschwindigkeit v des Fluids 20 werden unterschiedliche Laufzeiten der Schallsignale beginnend vom Aussenden des Schallsignals durch das Sende- und Empfangselement des mindestens einen Schallmesswandlers 12 bis zum Empfang des Schallsignals an dem Sende- und Empfangselement des mindestens einen Schallmesswandlers 12 erreicht. Dadurch ist eine Berechnung der Strömungsgeschwindigkeit v des Fluids möglich. Des Weiteren kann daraus auch ein Massenstrom des Fluids berechnet werden. Zusätzlich kann durch die Auswertung der Schallgeschwindigkeit auf die Zusammensetzung des Fluids geschlossen werden.

Figur 2 zeigt einen zeitlichen Spannungsverlauf eines von dem mindestens einen Schallmesswandler 12 abgegebenen Ausgangssignals 40. Des Weiteren zeigt Figur 2 zeitliche Verläufe mehrerer Echosignale 42, die von dem mindestens einen Schallmesswandler 12 empfangen werden können. Für eines der Echosignale 42 ist des Weiteren eine Laufzeit T_sig des Schallsignals vom Beginn des Ausgangssignals 40 bis zum Beginn des Echosignals 42 dargestellt.

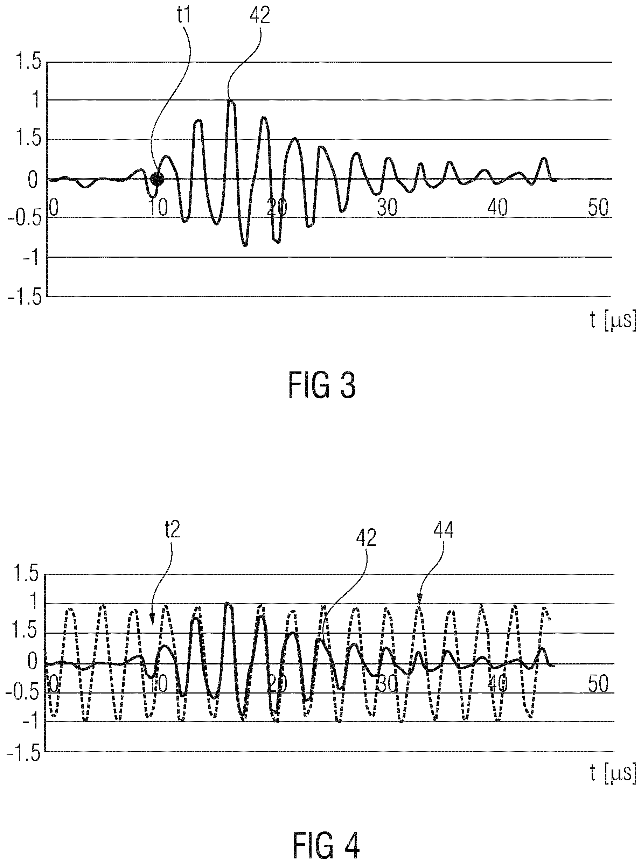

In Figur 3 ist ein zeitlicher Verlauf des Echosignals 42 mit einer hohen zeitlichen Auflösung gezeigt. Das Echosignal 42 ist hier dargestellt normiert auf einen Betrag eines Werts einer maximalen Amplitude des Echosignals 42.

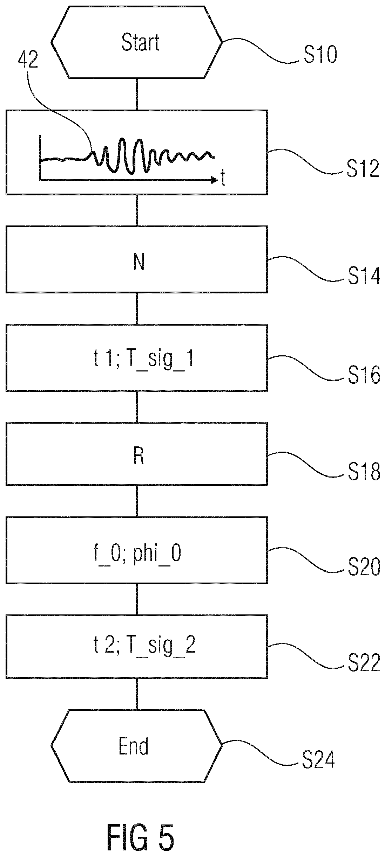

Figur 4 zeigt das normierte Echosignal 42 entsprechend der Figur 3 und den Verlauf eines Referenzsinussignals 44. Die Bedeutung des Referenzsinussignals 44 wird im Rahmen der Beschreibung zu der Figur 5 näher erläutert.

Ein in Figur 5 schematisch dargestelltes Programm, mittels dem die Vorrichtung 30 zum Betreiben der akustischen Messvorrichtung 10 betrieben wird, ist vorzugsweise auf einem Speichermedium der Vorrichtung 30 gespeichert.

Das Programm wird vorzugsweise in einem Schritt S10 gestartet, in dem gegebenenfalls Variablen initialisiert werden. Dies geschieht vorzugsweise bei Inbetriebnahme der akustischen Messvorrichtung 10.

In einem Schritt S12 wird das Ausgangssignal 40 von dem Schallmesswandler 12 abgegeben und das Echosignal 42 des Ausgangssignals 40 von dem Schallmesswandler 12 empfangen. Der zeitliche Verlauf des Echosignals 42 wird erfasst. Die Bearbeitung des Programms wird anschließend in einem Schritt S14 fortgesetzt. In dem Schritt S14 wird eine Normierung N des zeitlichen Verlaufs des Echosignals 42 auf einen Wert eines Betrags einer maximalen Amplitude des Echosignals 42 durchgeführt. Der derart normierte zeitliche Verlauf des Echosignals 42 ist in den Figuren 3 und 4 gezeigt. Die Bearbeitung des Programms wird anschließend in einem Schritt S16 fortgesetzt.

In dem Schritt S16 wird ein Wert t1 eines Zeitpunkts eines ersten Nulldurchgangs des zeitlichen Verlaufs des normierten Echosignals 42 ermittelt (siehe auch Figur 3) . Ein erster Schätzwert T_sig_1 einer Laufzeit des Schallsignals vom Beginn des Ausgangssignals 40 bis zum Beginn des Echosignals 42 wird bestimmt abhängig von dem Wert t1 des Zeitpunkts des ersten Nulldurchgangs des zeitlichen Verlaufs des normierten Echosignals 42. Der erste Schätzwert T_sig_1 repräsentiert einen ersten Näherungswert für die Laufzeit des Schallsignals vom Beginn des Ausgangssignals 40 bis zum Beginn des Echosignals 42. Die Bearbeitung des Programms wird anschließend in einem Schritt S18 fortgesetzt.

In dem Schritt S18 wird mittels einer Kreuzkorrelation zwischen dem Echosignal 42 und dem Referenzsinussignal 44 ein Verlauf einer Kreuzkorrelationsfunktion R, abhängig von einer Frequenz und einer Phase des Referenzsinussignals 44, ermittelt. Die Frequenz des Referenzsinussignals 44 wird derart variiert, dass sie in einem vorgegebenen Bereich um eine Frequenz des Ausgangssignals 40 liegt. Beispielsweise wird die Frequenz des Referenzsinussignals 44 derart variiert, dass sie in einem Bereich von +/- 5% um die Frequenz des Ausgangssignals 40 liegt. Vorzugsweise wird die Kreuzkorrelationsfunktion R für Phasenwerte 0 und π/2 des Referenzsinussignals 44 ermittelt. Die Frequenz und die Phase des Referenzsinussignals 44 werden vorzugsweise gemeinsam variiert. Alternativ können die Frequenz und die Phase des Referenzsinussignals 44 in getrennten Schritten variiert werden. Beispielsweise kann zunächst die Frequenz des Referenzsinussignals 44 variiert werden, bis eine maximale Übereinstimmung der Frequenzen des Echosignals 42 und des Referenzsinussignals 44 erreicht ist. In einem weiteren Schritt wird dann die Phase des Referenzsinussignals 44 variiert, bis eine möglichst gute Übereinstimmung zwischen dem Echosignal 42 und dem Referenzsinussignal 44 erhalten wird. Die Bearbeitung des Programms wird anschließend in einem Schritt S20 fortgesetzt.

In dem Schritt S20 wird ein Wert f_0 der Frequenz des Referenzsinussignals 44, für den die Kreuzkorrelationsfunktion R einen Maximalwert erreicht, ermittelt. Der Wert f_0 der Frequenz des Referenzsinussignals 44, für den die Kreuzkorrelationsfunktion R einen Maximalwert erreicht, ist repräsentativ für eine maximale Übereinstimmung der Frequenz des Referenzsinussignals 44 mit der Frequenz des Echosignals 42. Des Weiteren wird ein Wert phi_0 der Phase des Referenzsinussignals 44, für den die Kreuzkorrelationsfunktion R den Maximalwert erreicht, ermittelt. Der Wert phi_0 der Phase des Referenzsinussignals 44, für den die Kreuzkorrelationsfunktion R den Maximalwert erreicht, ist repräsentativ für eine maximale Übereinstimmung der Phase des Referenzsinussignals 44 mit der Phase des Echosignals 42 (siehe auch Figur 4). Die Bearbeitung des Programms wird anschließend in dem Schritt S22 fortgesetzt.

In dem Schritt S22 wird abhängig von dem Wert f_0 der Frequenz und dem Wert phi_0 der Phase des Referenzsinussignals 44, für den die Kreuzkorrelationsfunktion R einen Maximalwert erreicht, und dem ersten Schätzwert T_sig_1 der Laufzeit des Schallsignals vom Beginn des Ausgangssignals 40 bis zum Beginn des Echosignals 42 ein Wert t2 des Zeitpunkts des Nulldurchgangs des Referenzsinussignals 44 bestimmt. Abhängig von dem Wert t2 des Zeitpunkts des Nulldurchgangs des Referenzsinussignals 44 wird ein aktualisierter Schätzwert T_sig_2 der Laufzeit des Schallsignals vom Beginn des Ausgangssignals 40 bis zum Beginn des Echosignals 42 bestimmt. Vorzugsweise wird der aktualisierte Schätzwert T_sig_2 der Laufzeit des Schallsignals vom Beginn des Ausgangssignals 40 bis zum Beginn des Echosignals 42 mittels eines Iterationsverfahrens bestimmt. Die Bearbeitung des Programms wird anschließend in dem Schritt S24 fortgesetzt. In dem Schritt S24 wird das Programm beendet. Vorzugsweise wird das Programm jedoch während des Betriebs des Schallmesswandlers 20 regelmäßig abgearbeitet.

Ein Vorteil besteht darin, dass der aktualisierte Schätzwert T_sig_2 der Laufzeit des Schallsignals vom Beginn des Ausgangssignals 40 bis zum Beginn des Echosignals 42 mittels der Kreuzkorrelation des Echosignals 42 und des Referenzsinussignals 44 sehr genau bestimmt werden kann. Damit kann insbesondere darauf verzichtet werden, digitale Signalprozessoren mit hoch auflösender Abtastung und sehr schnelle Analog-Digital-Wandler für eine Bestimmung der Laufzeit des Schallsignals vom Beginn des Ausgangssignals 40 bis zum Beginn des Echosignals 42 einzusetzen. Vielmehr können preiswerte digitale Signalprozessoren und Analog-Digital-Wandler zum Einsatz kommen.

## Patentansprüche

1. Verfahren zum Betreiben einer akustischen Messvorrichtung (10), bei dem
- mindestens ein Schallmesswandler (12) der akustischen Messvorrichtung (10) bereitgestellt wird, wobei der mindestens eine Schallmesswandler (12) ausgebildet ist zum Aussenden und/oder zum Empfangen von Schallsignalen,
- ein Ausgangssignal (40) von dem mindestens einen Schallmesswandler (12) abgegeben und ein Echosignal (42) des Ausgangssignals (40) von dem mindestens einen Schallmesswandler (12) empfangen wird,
- ein zeitlicher Verlauf des Echosignals (42) erfasst wird,
- aus dem zeitlichen Verlauf des Echosignals (42) ein erster Schätzwert (T_sig_1) einer Laufzeit des Schallsignals vom Beginn des Ausgangssignals (40) bis zum Beginn des Echosignals (42) bestimmt wird,
- mittels einer Kreuzkorrelation zwischen dem Echosignal (42) und einem Referenzsinussignal (44) ein Verlauf einer Kreuzkorrelationsfunktion (R) abhängig von einer Frequenz und einer Phase des Referenzsinussignals (44) ermittelt wird, wobei die Frequenz des Referenzsinussignals (44) derart variiert wird, dass sie in einem vorgegebenen Bereich um eine Frequenz des Ausgangssignals (40) liegt,
- ein Wert (f_0) der Frequenz des Referenzsinussignals (44) und ein Wert (phi_0) der Phase des Referenzsinussignals (44) ermittelt werden, für die ein Maximalwert der Kreuzkorrelationsfunktion (R) erreicht wird und,
- abhängig von dem Wert (f_0) der Frequenz des Referenzsinussignals (44) und dem Wert (phi_0) der Phase des Referenzsinussignals (44), für die der Maximalwert der Kreuzkorrelationsfunktion (R) erreicht wird, und dem ersten Schätzwert (T_sig_1) der Laufzeit des Schallsignals vom Beginn des Ausgangssignals (40) bis zum Beginn des Echosignals (42) ein aktualisierter Schätzwert (T_sig_2) der Laufzeit des Schallsignals vom Beginn des Ausgangssignals (40) bis zum Beginn des Echosignals (42) bestimmt wird.

2. Verfahren nach Anspruch 1, wobei die Kreuzkorrelationsfunktion (R) der Kreuzkorrelation zwischen dem Echosignal (42) und dem Referenzsinussignal (44) abhängig von der Frequenz und für Phasenwerte 0 und π/2 des Referenzsinussignals (44) ermittelt wird.

3. Verfahren nach Anspruch 1 oder 2, wobei das Bestimmen des aktualisierten Schätzwerts (T_sig_2) der Laufzeit des Schallsignals vom Beginn des Ausgangssignals (40) bis zum Beginn des Echosignals (42) mittels eines Iterationsverfahrens erfolgt.

4. Verfahren nach einem der vorhergehenden Ansprüche, wobei das Echosignal (42) auf einen Wert eines maximalen Betrags einer Amplitude des Echosignals (42) normiert wird.

5. Verfahren nach Anspruch 4, wobei der erste Schätzwert (T_sig_1) der Laufzeit des Schallsignals vom Beginn des Ausgangssignals (40) bis zum Beginn des Echosignals (42) bestimmt wird abhängig von einem Zeitpunkt (t1) eines ersten Nulldurchgangs des normierten Echosignals (42).

6. Verfahren nach Anspruch 4 oder 5, wobei der aktualisierte Schätzwert (T_sig_2) der Laufzeit des Schallsignals vom Beginn des Ausgangssignals (40) bis zum Beginn des Echosignals (42) bestimmt wird abhängig von einem Zeitpunkt (t2) eines Nulldurchgangs des Referenzsinussignals (44).

7. Verfahren nach einem der vorhergehenden Ansprüche, wobei der mindestens eine Schallmesswandler (12) ein Ultraschallmesswandler ist.

8. Vorrichtung zum Betreiben einer akustischen Messvorrichtung, die dazu ausgebildet ist
- mindestens ein Schallmesswandlers (12) der akustischen Messvorrichtung (10) bereitzustellen, wobei der mindestens eine Schallmesswandler (12) ausgebildet ist zum Aussenden und/oder zum Empfangen von Schallsignalen,
- ein Ausgangssignal (40) von dem mindestens einen Schallmesswandler (12) abzugeben und ein Echosignal (42) des Ausgangssignals (40) von dem mindestens einen Schallmesswandler (12) zu empfangen,
- einen zeitlichen Verlaufs des Echosignals (42) zu erfassen,
- aus dem zeitlichen Verlauf des Echosignals (42) einen ersten Schätzwert (T_sig) einer Laufzeit des Schallsignals vom Beginn des Ausgangssignals (40) bis zum Beginn des Echosignals (42) zu bestimmen,
- mittels einer Kreuzkorrelation zwischen dem Echosignal (42) und einem Referenzsinussignal (44) einen Verlauf einer Kreuzkorrelationsfunktion (R) abhängig von einer Frequenz und einer Phase des Referenzsinussignals (44) zu ermitteln, wobei die Frequenz des Referenzsinussignals (44) derart variiert wird, dass sie in einem vorgegebenen Bereich um eine Frequenz des Ausgangssignals (40) liegt,
- einen Wert (f_0) der Frequenz des Referenzsinussignals (44) und einen Wert (phi_0) der Phase des Referenzsinussignals (44) zu ermitteln, für die ein Maximalwert der Kreuzkorrelationsfunktion (R) erreicht wird,
- abhängig von dem Wert (f_0) der Frequenz des Referenzsinussignals (44) und dem Wert (phi_0) der Phase des Referenzsinussignals (44), für die der Maximalwert der Kreuzkorrelationsfunktion (R) erreicht wird, und dem ersten Schätzwert (T_sig_1) der Laufzeit des Schallsignals vom Beginn des Ausgangssignals (40) bis zum Beginn des Echosignals (42) einen aktualisierten Schätzwert (T_sig_2) der Laufzeit des Schallsignals vom Beginn des Ausgangssignals (40) bis zum Beginn des Echosignals (42) zu bestimmen.

## Claims

1. Method for operating an acoustic measuring apparatus (10), in which
- at least one sound measurement transducer (12) of the acoustic measuring apparatus (10) is provided, wherein the at least one sound measurement transducer (12) is designed to transmit and/or receive sound signals,
- an output signal (40) from the at least one sound measurement transducer (12) is delivered and an echo signal (42) of the output signal (40) from the at least one sound measurement transducer (12) is received,
- a time characteristic of the echo signal (42) is recorded,
- the time characteristic of the echo signal (42) is used to determine a first estimate (T_sig_1) of a delay in the sound signal from the beginning of the output signal (40) to the beginning of the echo signal (42),
- a cross-correlation between the echo signal (42) and a reference sinusoidal signal (44) is used to ascertain a characteristic of a cross-correlation function (R) on the basis of a frequency and a phase of the reference sinusoidal signal (44), wherein the frequency of the reference sinusoidal signal (44) is varied such that it is in a prescribed range around a frequency of the output signal (40),
- a value (f_0) of the frequency of the reference sinusoidal signal (44) and a value (phi_0) of the phase of the reference sinusoidal signal (44) for which a maximum value of the cross-correlation function (R) is achieved are ascertained, and
- the value (f 0) of the frequency of the reference sinusoidal signal (44) and the value (phi_0) of the phase of the reference sinusoidal signal (44) for which the maximum value of the cross-correlation function (R) is achieved and the first estimate (T_sig_1) of the delay in the sound signal from the beginning of the output signal (40) to the beginning of the echo signal (42) are taken as a basis for determining an updated estimate (T_sig_2) of the delay in the sound signal from the beginning of the output signal (40) to the beginning of the echo signal (42) .

2. Method according to Claim 1, wherein the cross-correlation function (R) of the cross-correlation between the echo signal (42) and the reference sinusoidal signal (44) is ascertained on the basis of the frequency and for phase values 0 and π/2 of the reference sinusoidal signal (44).

3. Method according to Claim 1 or 2, wherein the updated estimate (T_sig_2) of the delay in the sound signal from the beginning of the output signal (40) to the beginning of the echo signal (42) is determined by means of an iteration method.

4. Method according to one of the preceding claims, wherein the echo signal (42) is normalized to a value of a maximum absolute value of an amplitude of the echo signal (42).

5. Method according to Claim 4, wherein the first estimate (T_sig_1) of the delay in the sound signal from the beginning of the output signal (40) to the beginning of the echo signal (42) is determined on the basis of a time (t1) of a first zero crossing of the normalized echo signal (42).

6. Method according to Claim 4 or 5, wherein the updated estimate (T sig 2) of the delay in the sound signal from the beginning of the output signal (40) to the beginning of the echo signal (42) is determined on the basis of a time (t2) of the zero crossing of the reference sinusoidal signal (44).

7. Method according to one of the preceding claims, wherein the at least one sound measurement transducer (12) is an ultrasonic measurement transducer.

8. Apparatus for operating an acoustic measuring apparatus, designed
- to provide at least one sound measurement transducer (12) of the acoustic measuring apparatus (10), wherein the at least one sound measurement transducer (12) is designed to transmit and/or receive sound signals,
- to deliver an output signal (40) from the at least one sound measurement transducer (12) and to receive an echo signal (42) of the output signal (40) from the at least one sound measurement transducer (12),
- to record a time characteristic of the echo signal (42),
- to use the time characteristic of the echo signal (42) to determine a first estimate (T_sig) of the delay in the sound signal from the beginning of the output signal (40) to the beginning of the echo signal (42),
- to use a cross-correlation between the echo signal (42) and a reference sinusoidal signal (44) to ascertain a characteristic of a cross-correlation function (R) on the basis of a frequency and a phase of the reference sinusoidal signal (44), wherein the frequency of the reference sinusoidal signal (44) is varied such that it is in a prescribed range around a frequency of the output signal (40),
- to ascertain a value (f_0) of the frequency of the reference sinusoidal signal (44) and a value (phi 0) of the phase of the reference sinusoidal signal (44) for which a maximum value of the cross-correlation function (R) is achieved,
- to take the value (f_0) of the frequency of the reference sinusoidal signal (44) and the value (phi_0) of the phase of the reference sinusoidal signal (44) for which the maximum value of the cross-correlation function (R) is achieved and the first estimate (T_sig_1) of the delay in the sound signal from the beginning of the output signal (40) to the beginning of the echo signal (42) as a basis for determining an updated estimate (T_sig_2) of the delay in the sound signal from the beginning of the output signal (40) to the beginning of the echo signal (42).

## Revendications

1. Procédé pour l'exploitation d'un dispositif de mesure acoustique (10), dans lequel
- le dispositif de mesure acoustique (10) est doté d'au moins un transducteur de mesure acoustique (12), dans lequel ledit au moins un transducteur de mesure acoustique (12) est conçu pour émettre et/ou recevoir des signaux sonores,
- un signal de sortie (40) est délivré par ledit au moins un transducteur de mesure acoustique (12) et un signal d'écho (42) du signal de sortie (40) est reçu en provenance dudit au moins un transducteur de mesure acoustique (12),
- une courbe temporelle du signal d'écho (42) est détectée,
- une première valeur estimée (T_sig_1) d'un temps de propagation du signal sonore depuis le début du signal de sortie (40) jusqu'au début du signal d'écho (42) est déterminée à partir de la courbe temporelle du signal d'écho (42),
- au moyen d'une corrélation croisée entre le signal d'écho (42) et un signal sinusoïdal de référence (44), une courbe d'une fonction de corrélation croisée (R) est déterminée en fonction d'une fréquence et d'une phase du signal sinusoïdal de référence (44), dans lequel la fréquence du signal sinusoïdal de référence (44) est amenée à varier de manière à ce qu'elle se situe dans une plage prédéterminée autour d'une fréquence du signal de sortie (40),
- une valeur (f_0) de la fréquence du signal sinusoïdal de référence (44) et une valeur (phi_0) de la phase du signal sinusoïdal de référence (44) pour lesquelles une valeur maximale de la fonction de corrélation croisée (R) est atteinte, sont déterminées et,
- en fonction de la valeur (f_0) de la fréquence du signal sinusoïdal de référence (44) et de la valeur (phi_0) de la phase du signal sinusoïdal de référence (44) pour lesquelles la valeur maximale de la fonction de corrélation croisée (R) est atteinte, et de la première valeur estimée (T_sig_1) du temps de propagation du signal sonore depuis le début du signal de sortie (40) jusqu'au début du signal d'écho (42), une valeur estimée actualisée (T_sig_2) du temps de propagation du signal sonore depuis le début du signal de sortie (40) jusqu'au début du signal d'écho (42) est déterminée.

2. Procédé selon la revendication 1, dans lequel la fonction de corrélation croisée (R) de la corrélation croisée entre le signal d'écho (42) et le signal sinusoïdal de référence (44) est déterminée en fonction de la fréquence et pour des valeurs de phase égales à 0 et à n/2 du signal sinusoïdal de référence (44).

3. Procédé selon la revendication 1 ou 2, dans lequel la détermination de la valeur estimée actualisée (T_sig_2) du temps de propagation du signal sonore depuis le début du signal de sortie (40) jusqu'au début du signal d'écho (42) est effectuée au moyen d'un processus d'itération.

4. Procédé selon l'une des revendications précédentes, dans lequel le signal d'écho (42) est normalisé à une valeur égale à un niveau maximal d'une amplitude du signal d'écho (42) .

5. Procédé selon la revendication 4, dans lequel la première valeur estimée (T_sig_1) du temps de propagation du signal sonore depuis le début du signal de sortie (40) jusqu'au début du signal d'écho (42) est déterminée en fonction d'un temps (t1) d'un premier passage à zéro du signal d'écho normalisé (42).

6. Procédé selon la revendication 4 ou 5, dans lequel la valeur estimée actualisée (T_sig_2) du temps de propagation du signal sonore depuis le début du signal de sortie (40) jusqu'au début du signal d'écho (42) est déterminée en fonction d'un temps (t2) d'un passage à zéro du signal sinusoïdal de référence (44).

7. Procédé selon l'une des revendications précédentes, dans lequel ledit au moins un transducteur de mesure acoustique (12) est un transducteur de mesure à ultrasons.

8. Dispositif pour l'exploitation d'un dispositif de mesure acoustique, qui est conçu
- pour doter le dispositif de mesure acoustique (10) d'au moins un transducteur de mesure acoustique (12), dans lequel ledit au moins un transducteur de mesure acoustique (12) est conçu pour émettre et/ou recevoir des signaux sonores,
- pour délivrer en sortie un signal de sortie (40) dudit au moins un transducteur de mesure acoustique (12) et pour recevoir un signal d'écho (42) dudit signal de sortie (40) en provenance dudit au moins un transducteur de mesure acoustique (12),
- pour détecter une courbe temporelle du signal d'écho (42),
- pour déterminer une première valeur estimée (T_sig) d'un temps de propagation du signal sonore depuis le début du signal de sortie (40) jusqu'au début du signal d'écho (42) à partir de la courbe temporelle du signal d'écho (42),
- pour déterminer au moyen d'une corrélation croisée entre le signal d'écho (42) et un signal sinusoïdal de référence (44) une courbe d'une fonction de corrélation croisée (R) en fonction d'une fréquence et d'une phase du signal sinusoïdal de référence (44), dans lequel la fréquence du signal sinusoïdal de référence (44) est amenée à varier de manière à ce qu'elle se situe dans une plage prédéterminée autour d'une fréquence du signal de sortie (40),
- pour déterminer une valeur (f_0) de la fréquence du signal sinusoïdal de référence (44) et une valeur (phi_0) de la phase du signal sinusoïdal de référence (44) pour lesquelles une valeur maximale de la fonction de corrélation croisée (R) est atteinte,
- pour déterminer en fonction de la valeur (f_0) de la fréquence du signal sinusoïdal de référence (44) et de la valeur (phi 0) de la phase du signal sinusoïdal de référence (44) pour lesquelles la valeur maximale de la fonction de corrélation croisée (R) est atteinte, et de la première valeur estimée (T_sig_1) du temps de propagation du signal sonore depuis le début du signal de sortie (40) jusqu'au début du signal d'écho (42), une valeur estimée actualisée (T_sig_2) du temps de propagation du signal sonore depuis le début du signal de sortie (40) jusqu'au début du signal d'écho (42).
